(19) 

Europäisches
Patentamt
European
Patent Office
Office européen
des brevets

(11) **EP 4 509 301 A1**

(12) **EUROPEAN PATENT APPLICATION**
published in accordance with Art. 153(4) EPC

(43) Date of publication:
**19.02.2025 Bulletin 2025/08**

(21) Application number: **23831230.0**

(22) Date of filing: **21.06.2023**

(51) International Patent Classification (IPC):
**B32B 5/26** (2006.01)   **A41D 31/00** (2019.01)
**A41D 31/02** (2019.01)   **A41D 31/102** (2019.01)
**D04H 1/728** (2012.01)   **D06M 15/564** (2006.01)
**D06M 17/00** (2006.01)

(52) Cooperative Patent Classification (CPC):
**A41D 31/00; A41D 31/02; A41D 31/102;**
**B32B 5/04; B32B 5/26; D04H 1/728; D06M 15/564;**
**D06M 17/00**

(86) International application number:
**PCT/JP2023/022967**

(87) International publication number:
**WO 2024/004784 (04.01.2024 Gazette 2024/01)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **27.06.2022 JP 2022102787**

(71) Applicant: **Mizuno Corporation**
**Osaka-shi, Osaka 541-8538 (JP)**

(72) Inventors:
• **SAKURAI, Hiroki**
  **Osaka, 559-8510 (JP)**
• **SHIRAISHI, Atsushi**
  **Osaka, 559-8510 (JP)**
• **NISHIYAMA, Mari**
  **Osaka, 559-8510 (JP)**
• **WATANABE, Kei**
  **Nagano 386-8567 (JP)**
• **OHSAWA, Osamu**
  **Nagano 386-8567 (JP)**

(74) Representative: **Dehns**
**10 Old Bailey**
**London EC4M 7NG (GB)**

(54) **MOISTURE-PERMEABLE WATERPROOFING LAYERED FABRIC, PRODUCTION METHOD THEREFOR, AND GARMENT OBTAINED USING SAME**

(57) A moisture-permeable waterproof laminated fabric (9) includes an outer fabric layer (2), and a nanofiber nonwoven fabric layer (3) laminated on one face of the outer fabric layer (2). At least one face of the nanofiber nonwoven fabric layer (3) is a water-repellent layer (5). The outer fabric layer (2) and the nanofiber nonwoven fabric layer (3) are partially bonded together with an adhesive (4). A method for manufacturing the fabric includes applying a water-repellent agent to at least one face of the nanofiber nonwoven fabric layer (3) and curing the water-repellent agent to form a water-repellent layer (5), and partially bonding the nanofiber nonwoven fabric layer (3) and the outer fabric layer (2) together with an adhesive (4). As a result, the moisture-permeable waterproof laminated fabric that can continue to display the air permeability and the moisture permeability of its moisture-permeable film irrespective of exposure to rain and perspiration during wearing, the method for manufacturing the fabric, and a garment including the fabric are provided.

**EP 4 509 301 A1**

FIG. 4A

FIG. 4B

FIG. 4C

FIG. 4D

FIG. 4E

## Description

Technical Field

The present invention relates to a moisture-permeable waterproof laminated fabric having high moisture permeability and waterproofness, a method for manufacturing the fabric, and a garment including the fabric.

Background Art

Many moisture-permeable waterproof materials have been proposed. For example, porous materials formed into films using extruding and drawing techniques (polytetrafluoroethylene (PTFE)), porous materials formed into films by wet coagulation (polyurethane (PU)), and nonporous materials formed into films by dry coagulation (PU) have been mainly used. These materials have high numerical values for water pressure resistance and moisture permeability, but cannot eliminate a sticky feeling during wearing. Further, the nonporous film formed by dry coagulation is hydrophilic. When the film becomes wet by exposure to perspiration or rain, its performance deteriorates, and its appearance also deteriorates because the film swells by the wetness.

In recent years, new moisture-permeable films formed using methods other than the above have been proposed. More specifically, there have been proposals to laminate nanofibers spun by electrospinning (Patent Documents 1 and 2). For conventional moisture-permeable films, a material has also been proposed that includes a polyurethane film mixed with a hydrophobic material to prevent oil stain contamination and the deterioration in its water pressure resistance caused by washing (Patent Document 3). From a similar viewpoint, there has also been a proposal to subject nanofibers of a nanofiber moisture-permeable film to a hydrophobic treatment (Patent Document 4).

Prior Art Documents

Patent Documents

Patent Document 1: JP 2007-136970 A
Patent Document 2: JP 2008-213391 A
Patent Document 3: JP 2010-255132 A
Patent Document 4: JP 2010-030289 A

Disclosure of Invention

Problem to be Solved by the Invention

The above prior art has the improved durability, but the moisture-permeable films themselves become wet by exposure to rain and perspiration during wearing, and thus cannot display their air permeability and moisture permeability.

To solve the above conventional problem, the present invention provides a moisture-permeable waterproof laminated fabric that can continue to display the air permeability and the moisture permeability of its moisture-permeable film not only in a dry state but also irrespective of exposure to rain and perspiration during wearing, a method for manufacturing the fabric, and a garment including the fabric.

Means for Solving Problem

A moisture-permeable waterproof laminated fabric according to an aspect of the present invention includes an outer fabric layer, and a nanofiber nonwoven fabric layer laminated on one face of the outer fabric layer. At least one face of the nanofiber nonwoven fabric layer is a water-repellent layer. The outer fabric layer and the nanofiber nonwoven fabric layer are partially bonded together with an adhesive.

A method for manufacturing the moisture-permeable waterproof laminated fabric according to an aspect of the present invention is a method for manufacturing the moisture-permeable waterproof laminated fabric including the outer fabric layer, and the nanofiber nonwoven fabric layer laminated on one face of the outer fabric layer. The method includes applying a water-repellent agent to at least one face of the nanofiber nonwoven fabric layer and curing the water-repellent agent to form a water-repellent layer, and partially bonding the nanofiber nonwoven fabric layer and the outer fabric layer together with an adhesive.

A garment according to an aspect of the present invention includes the moisture-permeable waterproof laminated fabric.

Effects of the Invention

The moisture-permeable waterproof laminated fabric and the garment according to aspects of the present invention each include the outer fabric layer, and the nanofiber nonwoven fabric layer laminated on one face of the outer fabric layer. At least one face of the nanofiber nonwoven fabric layer is the water-repellent layer. The outer fabric layer and the nanofiber nonwoven fabric layer are partially bonded together with an adhesive. This configuration allows the fabric and the garment to continue to display the air permeability and the moisture permeability of its moisture-permeable film not only in a dry state but also irrespective of exposure to rain and perspiration during wearing. That is, rain from the atmosphere side of the moisture-permeable waterproof laminated fabric is repelled by the water-repellent layer of the front face of the nanofiber nonwoven fabric. Further, perspiration from the body side of the moisture-permeable waterproof laminated fabric (moisture perspiration: gas) is dispersed to the atmosphere side through spaces between yarns of the outer fabric layer, spaces in the knitted or woven structure of the outer fabric layer, and spaces in the nanofiber nonwoven fabric layer. Thus, the moisture-permeable waterproof laminated fabric and the garment each can continue to display the air permeability and moisture permeability of its nanofiber nonwoven fabric (moisture-permeable film) irrespective of exposure to rain and perspiration during wearing. As a result, the moisture permeability and the water pressure resistance can be prevented from deteriorating during wearing, a sticky feeling during wearing can be eliminated, and a comfortable environment in the garment can be maintained. The moisture-permeable waterproof laminated fabric can be efficiently and rationally manufactured using the method for manufacturing the moisture-permeable waterproof laminated fabric according to an aspect of the present invention.

Brief Description of Drawings

[FIG. 1] FIG. 1 is a schematic cross-sectional view of a moisture-permeable waterproof laminated fabric of a 2-layer structure according to an embodiment of the present invention.
[FIG. 2] FIG. 2 is a schematic cross-sectional view of a moisture-permeable waterproof laminated fabric of a 2.5-layer structure according to an embodiment of the present invention.
[FIG. 3] FIG. 3 is a schematic cross-sectional view of a moisture-permeable waterproof laminated fabric of a 3-layer structure according to an embodiment of the present invention.
[FIGS. 4] FIGS. 4A to 4E are schematic cross-sectional process diagrams illustrating a method for manufacturing a moisture-permeable waterproof laminated fabric of a 3-layer structure according to an embodiment of the present invention.
[FIG. 5] FIG. 5 is a schematic cross-sectional view illustrating a nanofiber nonwoven fabric layer and an outer fabric layer that are bonded together according to an embodiment of the present invention.
[FIG. 6] FIG. 6 is a two-dimensional photo (a scanning electron microscope (SEM), the magnification of 10,000 times) of a nanofiber nonwoven fabric according to an embodiment of the present invention.
[FIG. 7] FIG. 7 is a two-dimensional photo (a SEM, the magnification of 2,000 times) of a nanofiber nonwoven fabric according to an embodiment of the present invention.
[FIGS. 8] FIG. 8A is a schematic exploded view illustrating a moisture-permeability measuring device (an original method) used in the Examples of the present invention; and FIG. 8B is a perspective view of the assembled moisture-permeability measuring device.

Description of the Invention

According to an aspect of the present invention, a nanofiber nonwoven fabric layer is laminated on one face of an outer fabric layer, at least one face of the nanofiber nonwoven fabric layer is a water-repellent layer (water-repellent face), and the outer fabric layer and the nanofiber nonwoven fabric layer are partially bonded together with an adhesive. The outer fabric layer is a fabric layer on the outer side of a garment made of this laminated fabric. That is, when the garment is worn in the rain, the outer fabric layer is directly exposed to the rain. The outer fabric layer may have been subjected to a water-repellent treatment, but does not need to be water-resistant or waterproof. If the outer fabric layer has been subjected to a water-repellent treatment, the outer fabric layer repels a small amount of rain. However, when the outer fabric layer is exposed to rain for a long time, the rain permeates the fabric. The rain that has permeated the outer fabric layer can be prevented from entering the garment by providing a moisture-permeable waterproof layer on the inner side (skin side) of the outer fabric layer. However, if the moisture-permeable waterproof film is a nonporous film, the film characteristically absorbs water. Thus, the rain that has permeated the outer fabric layer is absorbed by the moisture-permeable waterproof film, enters the garment, wets worn clothes and the skin, and decreases the body temperature. To deal with this, at least one face of the moisture-permeable waterproof film is provided with a treated water-repellent layer to prevent water from entering the garment even when the outer fabric layer is wet. More preferably, the treated water-repellent layer is provided on the outer fabric layer side of the nanofiber nonwoven fabric. This configuration can more effectively prevent the moisture-permeable waterproof film from absorbing the rain that has permeated the outer fabric layer. Herein, the "at least one face" represents the front face, the back face, or both the faces.

In the treated water-repellent layer provided for the nanofiber nonwoven fabric layer, the whole treated face may be a water-repellent face, or part of the treated face may be a water-repellent face. The whole face being a water-repellent face means that in the treated water-repellent layer provided for the nanofiber nonwoven fabric layer, 100% of the nanofiber surface area that constitutes the treated face has been subjected to the water-repellent treatment. The partial water-repellent face means that in the treated water-repellent layer provided for the nanofiber nonwoven fabric layer, part of the nanofiber surface area that constitutes the treated face has been subjected to the water-repellent treatment. Even if the whole face is the water-repellent face, the nanofiber nonwoven fabric layer has spaces between fibers in its thickness direction, and thus has good air permeability. Thus, perspiration from the body (moisture perspiration: gas) can disperse to the atmosphere through spaces between yarns of the outer fabric layer, spaces in the knitted or woven structure of the outer fabric layer, and spaces in the nanofiber nonwoven fabric layer. Because at least one face of the nanofiber nonwoven fabric is the water-repellent layer, the water-repellent layer of the front face of the nanofiber nonwoven fabric repels rain from the atmosphere side, and thus eliminates a sticky feeling during wearing, and allows the moisture-permeable film to continue to display its air permeability and moisture permeability irrespective of exposure to rain and perspiration. Herein, the nanofiber nonwoven fabric having the water-repellent layer may be referred to as a "moisture-permeable film" or a "nanomembrane".

The thickness of the water-repellent layer is preferably 10 to 100% of the thickness of the nanofiber nonwoven fabric layer, more preferably 20 to 70% thereof, and further preferably 30 to 50% thereof. These ranges of thickness allow the water-repellent layer to sufficiently suppress the deterioration in the function of the nanofiber nonwoven fabric in a wet state, and also allow moisture retained by the nanofiber nonwoven fabric layer to be discharged to its outside through its non-water-repellent face.

The area ratio of the area of the water-repellent layer (water-repellent face) to the fiber surface area of the front face of the nanofiber nonwoven fabric layer is preferably 10-100%:100%, more preferably 20-95%:100% (a partial water-repellent face), and further preferably 30-90%:100% (a partial water-repellent face). These ranges of area ratio can prevent the water-repellent agent from filling pores of the nanofiber nonwoven fabric (moisture-permeable film), and also can prevent water entry. Herein, the front face of the nanofiber nonwoven fabric layer is the face of the nanofiber nonwoven fabric subjected to the water-repellent treatment.

If the area ratio of the water-repellent treatment is 100%, the water-repellent agent can coat the whole treated water-repellent face of the nanofiber nonwoven fabric layer that constitutes the nanofiber nonwoven fabric. Thus, the nanofibers do not absorb and retain water when the fabric is wet, and it is possible to suppress the deterioration in the functionality. Further, it is also possible to suppress washing detergent residue, and thus suppress the deterioration in the water pressure resistance caused by washing.

If the area ratio of the water-repellent treatment is 30 to 90%, the water-repellent agent can coat 30 to 90% of the surface area of the treated water-repellent face of the nanofiber nonwoven fabric layer that constitutes the nanofiber nonwoven fabric. The partial water-repellent treatment reduces nanofibers of the nanofiber nonwoven fabric that change their diameters by being coated with the water-repellent agent. Thus, the partial water-repellent treatment does not fill spaces in the nanofiber nonwoven fabric, and allows the air permeability and the moisture permeability to be maintained at high levels when the nanofiber nonwoven fabric is dry. When the fabric is wet, it is possible to suppress the nanofibers absorbing and retaining water, and thus suppress the deterioration in the functionality. Further, it is also possible to suppress washing detergent residue, and thus suppress the deterioration in the water pressure resistance caused by washing. The moisture retained by the nanofiber nonwoven fabric layer can be discharged to its outside through its non-water-repellent portion. Herein, the area ratio is the ratio of the area of the water-repellent agent that coats the front layer of the nanofiber nonwoven fabric to the total nanofiber surface area that constitutes the front layer of the nanofiber nonwoven fabric when the total nanofiber surface area is taken as 100. The front layer of the nanofiber nonwoven fabric is the layer to which the treated water-repellent face has been provided.

A moisture-permeable waterproof laminated fabric according to an aspect of the present invention may have a 2-layer structure, a 2.5-layer structure, or a 3-layer structure. In the 2-layer structure, a nanofiber nonwoven fabric is laminated on one face of an outer fabric. In the 2.5-layer structure, a resin layer is laminated on one face of the nanofiber nonwoven fabric. In the 3-layer structure, an inner fabric is further laminated on one face of the nanofiber nonwoven fabric, and the nanofiber nonwoven fabric and the inner fabric are partially bonded together with an adhesive. The 3-layer structure is preferable. The 3-layer structure can protect both the sides of the nanofiber nonwoven fabric.

The nanofiber nonwoven fabric used according to an aspect of the present invention can be manufactured by electrospinning. The nonwoven fabric is made of a fiber including monofilaments whose average diameter is preferably 1 to 1000 nm, more preferably 10 to 900 nm, and further preferably 50 to 800 nm. The nanofiber nonwoven fabric layer has a thickness of preferably 0.1 to 100 pm, more preferably 1 to 90 pm, and further preferably 5 to 80 $\mu$m. The nanofiber nonwoven fabric layer has a mass per unit area of preferably 1 to 50 g/m$^2$, more preferably 2 to 40 g/m$^2$, and further preferably 3 to 30 g/m$^2$.

The outer fabric and/or the inner fabric may be a woven fabric or a knitted fabric. The knitted fabric may be knitted by warp knitting, circular knitting, or weft knitting. Examples of the woven fabric include a plain weave, a twill weave, a sateen weave, and varied types thereof. A fabric knitted by warp knitting or a woven fabric is preferable. These fabrics are each likely to disperse perspiration from the body (moisture perspiration: gas) to the atmosphere through spaces in its knitted or woven structure. The outer fabric has a mass of preferably 10 to 150 g/m$^2$, more preferably 20 to 140 g/m$^2$, and further preferably 30 to 130 g/m$^2$. The inner fabric has a mass of preferably 10 to 150 g/m$^2$, more preferably 2 to 150 g/m$^2$, and further preferably 3 to 100 g/m$^2$.

Preferably, the outer fabric is preliminarily subjected to a water-repellent treatment. The moisture-permeable waterproof laminated fabric according to an aspect of the present invention preferably has a thickness of 0.15 to 1.0 mm. The moisture-permeable waterproof laminated fabric according to an aspect of the present invention has a mass of preferably 50 to 200 g/m$^2$, more preferably 70 to 160 g/m$^2$, and further preferably 80 to 140 g/m$^2$. This configuration can reduce the weight.

Regarding the partial bonding of the outer fabric and the nanofiber nonwoven fabric with an adhesive, the ratio of the thickness of the adhesive layer to the thickness of the nanofiber nonwoven fabric layer (impregnation rate) is preferably 80% or less, more preferably 20 to 80%, and further preferably 25 to 80%. These ranges of thickness ratio prevent the adhesive from reaching the back face and the front face through the nanofiber nonwoven fabric and the outer fabric, and thus provide a good appearance.

The area ratio of the partial bonding is preferably 10 to 80%, more preferably 20 to 70%, and further preferably 30 to 60%. These ranges of area ratio allow perspiration from the body (moisture perspiration: gas) to disperse to the atmosphere through spaces between yarns of the outer fabric layer, spaces in the knitted or woven structure of the outer fabric layer, and spaces in the nanofiber nonwoven fabric layer. Thus, the moisture-permeable film can continue to display its air permeability and moisture permeability irrespective of exposure to rain and perspiration during wearing.

Herein, the area ratio is the ratio of the area of the adhesive projected onto the nanofiber nonwoven fabric layer seen from above to the total of the appearance fiber surface area of the nanofiber nonwoven fabric seen from above and the area of spaces between nanofibers of the nanofiber nonwoven fabric seen from above.

The amount of the adhesive applied is preferably 2 to 20 g/m$^2$, more preferably 3 to 15 g/m$^2$, and further preferably 4 to 12 g/m$^2$. Because these ranges of application amount improve the bonding strength between the nanofiber nonwoven fabric and the outer fabric, they do not peel off each other during practical use. Further, these ranges can maintain spaces between fibers of the nanofiber nonwoven fabric, and thus allow the moisture permeability and the air permeability to be maintained at high levels. These ranges also allow good texture to be maintained.

It is preferable that the nanofibers that are in contact with the bonding face where the nanofiber nonwoven fabric is bonded to the fabric layer are impregnated with the adhesive for joining such that the adhesive wraps each nanofiber in its circumferential direction. Because the adhesive coats fibers of the nanofiber nonwoven fabric such that the adhesive wraps each fiber, the bonded area between the nanofiber and the adhesive increases, resulting in high bonding strength. The same applies to the bonding of the treated water-repellent layer of the nanofiber nonwoven fabric. That is, because the nanofibers that have been subjected to the water-repellent treatment are coated with the adhesive, it is possible to suppress the water-repellent agent coming off the front layer of the nanofiber nonwoven fabric, and thus suppress the deterioration in the water pressure resistance caused by washing.

Regarding the partial bonding of the inner fabric and the nanofiber nonwoven fabric with the adhesive, the ratio of the thickness of the adhesive layer to the thickness of the nanofiber nonwoven fabric layer (impregnation rate) is preferably 80% or less, more preferably 20 to 80%, and further preferably 25 to 80%. These ranges of thickness ratio prevent the adhesive from reaching the back face and the front face through the nanofiber nonwoven fabric and the inner fabric, and thus provide a good appearance. The area ratio of the partial bonding is preferably 10 to 80%, more preferably 20 to 70%, and further preferably 30 to 60%. These ranges of area ratio provide sufficient bonding strength. Further, these ranges prevent the adhesive from filling spaces of the nanofiber nonwoven fabric, and thus allow the moisture permeability and the air permeability to be maintained at high levels. These ranges also allow good texture to be maintained.

It is preferable that in the partial bonding portion where the outer fabric and the nanofiber nonwoven fabric are partially bonded together with the adhesive, and in the partial bonding portion where the inner fabric and the nanofiber nonwoven fabric are partially bonded together with the adhesive, 20 to 50% of the nanofiber layer is impregnated in the thickness direction with the adhesive. This configuration provides sufficient bonding strength, allows the moisture permeability and the air permeability to be maintained at high levels, and allows good texture to be maintained. It is preferable that the nanofibers in the face of the nanofiber nonwoven fabric opposite its treated water-repellent face are impregnated with the adhesive for joining such that the adhesive wraps each nanofiber in its circumferential direction. Because the adhesive coats fibers of the nanofiber nonwoven fabric such that the adhesive wraps each fiber, the bonded area between the nanofiber and the adhesive increases, and thus good bonding strength can be obtained.

The adhesive may be polyurethane-based, polyester-based, polyamide-based, acrylic-based, silicone-based, or inorganic. The adhesive is not limited but preferably has excellent compatibility with the nanofiber nonwoven fabric. For example, if the nanofiber is polyurethane, the adhesive is preferably urethane-based. A moisture-curing urethane binder is much preferable because it not only can be used at a low temperature and thus can bond the nanofiber nonwoven fabric without impairing its structure, but also does not need a solvent for bonding and thus has a small environmental load. The amount of the adhesive applied is preferably 2 to 20 g/m$^2$, more preferably 3 to 15 g/m$^2$, and further preferably 4 to 12 g/m$^2$. Because these ranges of application amount allow high bonding strength between the nanofiber nonwoven fabric and the outer fabric to be maintained, they do not peel off each other during practical use. Further, these ranges allow the moisture permeability and the air permeability to be maintained, and allow good texture to be maintained.

When the moisture-permeable waterproof laminated fabric is wet with liquid water whose mass is 30 to 80% of the mass of the fabric, the fabric has an air permeability resistance of preferably 0 to 277.5 kPa ·s/m, and more preferably 55 to 277.5 kPa ·s/m. These ranges of air permeability resistance allow a low air permeability resistance to be maintained in a wet state, prevent the moisture permeability and the water pressure resistance from deteriorating during wearing, and allow a comfortable environment in the garment to be maintained during wearing. As a pretreatment before a test, the moisture-permeable waterproof laminated fabric is immersed in water for 60 seconds and then hung to dry for 30 seconds. At the start of the measurement, it is confirmed whether the moisture-permeable waterproof laminated fabric is wet, that is, retains liquid water whose mass is 30 to 80% of the mass (as 100%) of the fabric, and then the measurement is performed. When the moisture-permeable waterproof laminated fabric is wet, that is, retains liquid water whose mass is 30 to 80% of the mass (as 100%) of the fabric, the fabric has a certain air permeability resistance.

The moisture-permeable waterproof laminated fabric in a dry state has a moisture permeability of preferably 5,000 to 20,000 g/m$^2$·24h, more preferably 7,000 to 18,000 g/m$^2$·24h, and further preferably 9,000 to 15,000 g/m$^2$·24h according to method A-1 specified in JIS L 1099:2012. The moisture-permeable waterproof laminated fabric in a dry state has a moisture permeability of preferably 10,000 to 100,000 g/m$^2$·24h, more preferably 20,000 to 90,000 g/m$^2$·24h, and further preferably 30,000 to 80,000 g/m$^2$·24h according to method B-1 specified in JIS L 1099:2012. The moisture-permeable waterproof laminated fabric has a water pressure resistance of preferably 7,000 mm to 30,000 mm, more preferably 8,500 mm to 30,000 mm, and further preferably 10,000 mm to 30,000 mm according to JIS L 1092:2009. The moisture-permeable waterproof laminated fabric after washed 20 times has a water pressure resistance of preferably 5,000 to 25,000 mm, more preferably 7,000 to 25,000 mm, and further preferably 8,000 to 25,000 mm according to method C4M specified in JIS L 1930:2014. The moisture-permeable waterproof laminated fabric in both a dry state and a wet state has absolute humidity in a space of preferably 10 to 17 g/m$^3$ according to an original method, The moisture-permeable waterproof laminated fabric has an air permeability of preferably 0.01 to 2 cc/m$^2$·sec, more preferably 0.05 to 1.5 cc/m$^2$·sec, and further preferably 0.1 to 1 cc/m$^2$·sec according to JIS L 1096:2010 (the Frazier method). These ranges allow a comfortable environment in the garment to be maintained during wearing.

A method for manufacturing the moisture-permeable waterproof laminated fabric according to an aspect of the present invention is as follows: A water-repellent agent is applied to the outer fabric side of a nanofiber nonwoven fabric and cured to form a water-repellent layer, and the water-repellent layer side of the nanofiber nonwoven fabric and an outer fabric are partially bonded together with an adhesive. Alternatively, a nanofiber nonwoven fabric and an outer fabric are partially bonded together, and then, a water-repellent agent is applied to a non-bonded face of the nanofiber nonwoven fabric and cured. Alternatively, an outer fabric and an inner fabric are each partially bonded to a nanofiber nonwoven fabric, and then, a water-repellent agent is applied to the outer fabric or the inner fabric using, e.g., a pad and drying method and cured. In this case, the water-repellent agent is also applied to a face of the nanofiber nonwoven fabric through spaces between fibers of the outer fabric or the inner fabric and spaces in the structure of the outer fabric or the inner fabric.

It is preferable that the water-repellent layer is at least one face of the nanofiber nonwoven fabric layer that has been subjected to the water-repellent treatment with a non-fluorine-based water-repellent agent. The non-fluorine-based water-repellent agent may be urethane-based, hydrocarbon-based, silicone-based, or acrylic-based. The non-fluorine-based water-repellent agent is preferable because conventional fluorine-based water-repellent agents have large environmental loads and their use is limited although they are highly water-repellent and durable. A non-fluorine-based water-repellent agent that has a high affinity with the nanofiber nonwoven fabric is much preferable. For example, if the nanofiber nonwoven fabric is made of a polyurethane fiber, a urethane-based non-fluorine-based water-repellent agent is preferable. An alkyl-urethane-based non-fluorine-based water-repellent agent is further preferable. A moisture-permeable waterproof fabric containing a conventional fluorine-based water-repellent agent, or a moisture-permeable waterproof laminated fabric including a polytetrafluoroethylene (PTFE) film has affinity with hydrophobic groups of detergents, and thus its air permeability may deteriorate by washing. The alkyl-urethane-based non-fluorine-based water-repellent agent has a high affinity with a polyurethane nanofiber nonwoven fabric, is likely to adhere to the surfaces of its nanofibers, and can effectively suppress the deterioration in its water pressure resistance caused by washing.

The amount of the water-repellent agent applied to the nanofiber nonwoven fabric is preferably 2 to 10% owf (abbreviation of "on the weight of fiber"). Within this range, the water-repellent agent does not fill the pores of the nanofiber nonwoven fabric, and also can prevent entry of water.

It is preferable that the water-repellent layer side of the nanofiber nonwoven fabric and the outer fabric or the inner fabric are partially bonded together by partially applying the adhesive to the outer fabric or the inner fabric to bond the outer fabric or the inner fabric to the water-repellent layer side of the nanofiber nonwoven fabric. It is also preferable that the non-water-repellent layer side of the nanofiber nonwoven fabric and the outer fabric or the inner fabric are bonded together by partially applying the water-repellent agent to the outer fabric or the inner fabric to bond the outer fabric or the inner fabric to the non-water-repellent layer side of the nanofiber nonwoven fabric.

Preferable manufacturing methods according to aspects of the present invention are as follows:

Method A: a 3-layer structure; after an inner fabric is bonded to a nanofiber nonwoven fabric, a water-repellent layer is formed.

(1) Bonding an inner fabric to a nanofiber nonwoven fabric
An adhesive is partially applied to a face of an inner fabric to partially bond the inner fabric to a nanofiber nonwoven fabric.
(2) Forming a water-repellent layer for the nanofiber nonwoven fabric
Next, a water-repellent agent is applied to the nanofiber nonwoven fabric, and cured by aging to form a water-repellent layer.
(3) Bonding the nanofiber nonwoven fabric to an outer fabric
Next, an adhesive is partially applied to a face of an outer fabric to partially bond the outer fabric to the nanofiber nonwoven fabric. Although it is preferable that the outer fabric is preliminarily subjected to a water-repellent treatment, the outer fabric may be subjected to a water-repellent treatment after the bonding. This treatment after the bonding can prevent the outer fabric from becoming wet with rain. The outer fabric may be a woven fabric or a knitted fabric. Fibers that can be used for the outer fabric include synthetic fibers such as polyester, nylon, polypropylene, acrylic, and polyurethane, and natural fibers such as cotton, hemp, silk, and wool. The outer fabric may include some of these fibers in the form of mixed fibers, mixed spun yarn, a mixed woven fabric, or a mixed knitted fabric.

Method B: a 3-layer structure; a padding water-repellent treatment after lamination of three layers

(1) Bonding an inner fabric to a nanofiber nonwoven fabric
(2) Forming a water-repellent layer for the nanofiber nonwoven fabric: A water-repellent layer is formed in the front side of the nanofiber nonwoven fabric.
(3) Bonding the nanofiber nonwoven fabric to an outer fabric
(4) Subjecting the laminated fabric to a water-repellent treatment

Method C: a 3-layer structure; method C differs from method A in the timing of the water-repellent treatment for the outer fabric.

(1) Bonding an inner fabric to a nanofiber nonwoven fabric
(2) Forming a water-repellent layer for the nanofiber nonwoven fabric: A water-repellent layer is formed in the front side of the nanofiber nonwoven fabric.
(3) Bonding the nanofiber nonwoven fabric to an outer fabric that has been subjected to a water-repellent treatment

Method D: a 3-layer structure; lamination starts from the front side.

(1) Bonding an outer fabric to a nanofiber nonwoven fabric
(2) Forming a water-repellent layer for the nanofiber nonwoven fabric
(3) Bonding the nanofiber nonwoven fabric to an inner fabric
(4) Subjecting the outer fabric to a water-repellent treatment

Method E: a 3-layer structure; lamination starts from the front side; a padding water-repellent treatment after lamination of three layers

(1) Bonding an outer fabric to a nanofiber nonwoven fabric
(2) Bonding the nanofiber nonwoven fabric to an inner fabric
(3) Subjecting the laminated fabric to a water-repellent treatment

Method F: a 3-layer structure; lamination starts from the front side; an outer fabric is preliminarily subjected to a water-repellent treatment.

(1) Bonding a nanofiber nonwoven fabric to an outer fabric that has been subjected to a water-repellent treatment
(2) Forming a water-repellent layer for the nanofiber nonwoven fabric:
(3) Bonding the nanofiber nonwoven fabric to an inner fabric
(4) Subjecting the outer fabric to a water-repellent treatment

Method G: a 2-layer structure without an inner fabric

(1) Forming a water-repellent layer for a nanofiber nonwoven fabric on a release paper
(2) Bonding the nanofiber nonwoven fabric to an outer fabric
(3) Subjecting the outer fabric to a water-repellent treatment

Method H: a 2-layer structure; an outer fabric is preliminarily subjected to a water-repellent treatment.

(1) Forming a water-repellent layer for a nanofiber nonwoven fabric on a release paper
(2) Bonding the nanofiber nonwoven fabric to an outer fabric that has been subjected to a water-repellent treatment

Method I: a 2.5-layer structure

(1) Forming a water-repellent layer for a nanofiber nonwoven fabric on a release paper
(2) Bonding the nanofiber nonwoven fabric to an outer fabric
(3) Subjecting the outer fabric to a water-repellent treatment
(4) Subjecting the back face of the nanofiber nonwoven fabric to a resin treatment

Method J: a 2.5-layer structure; an outer fabric is preliminarily subjected to a water-repellent treatment.

(1) Forming a water-repellent layer for a nanofiber nonwoven fabric on a release paper
(2) Bonding the nanofiber nonwoven fabric to an outer fabric that has been subjected to a water-repellent treatment
(3) Subjecting the back face of the nanofiber nonwoven fabric to a resin treatment

The nanofiber nonwoven fabric used according to an aspect of the present invention may be spun and laminated by melt blowing in which melted polymer is blown by hot air to form nanofibers. Alternatively, the nanofiber nonwoven fabric may be spun and laminated by composite dissolving spinning in which a sea part of each composite yarn having a sea-island structure is dissolved to form nanofibers. However, electrospinning is preferable because the nanofibers are easily controlled and stably manufactured. As materials used to manufacture the nanofiber nonwoven fabric, polymer materials such as polyurethane, polyester, nylon, polyethylene terephthalate, recycled polyester, polylactic acid, polyacrylonitrile, polyvinylidene fluoride, and crosslinked polyvinyl alcohol can be used. However, thermoplastic polyurethane is preferable considering flexibility and stretchability. The thermoplastic polyurethane may be polyester-based polyurethane such as "Elastollan ET680-15MS" (product name) manufactured by BASF, or polyether-based polyurethane such as "Elastollan ET385" (product name) manufactured by BASF. The nanofiber materials can be dissolved with any solvent suitable to dissolve polymer materials of the nanofiber materials. The nanofibers may be manufactured by spinning a polymer material to which an additive such as a heat storage agent, an antibacterial agent, a bacteriostatic agent, a water-repellent agent, or an antistatic agent has been added. The nanofibers have an average fiber diameter of 1 nm to 1,000 nm, more preferably 10 nm to 900 nm, and further preferably 50 nm to 800 nm. The nanofiber nonwoven fabric layer has a thickness of 0.1 $\mu$m to 100 $\mu$m, more preferably 1 $\mu$m to 90 pm, and further preferably 5 $\mu$m to 80 $\mu$m. The nanofiber nonwoven fabric layer has a mass per unit area of 1 g/m$^2$ to 50 g/m$^2$, more preferably 2 g/m$^2$ to 40 g/m$^2$, and further preferably 3 g/m$^2$ to 30 g/m$^2$. It is preferable that the nanofiber nonwoven fabric layer is made of fibers obtained by electrospinning.

The water-repellent agent used for the water-repellent treatment applied to at least one face of the nanofiber nonwoven fabric may be what is called a C6 water-repellent agent or a C0 water-repellent agent. The C0 water-repellent agent is preferable from the recent environmentally friendly view. The main component of the water-repellent agent may be, e.g., silicone-based, urethane-based, acrylic-based, or hydrocarbon-based. As a technique for directly applying the water-repellent treatment to at least one face of the nanofiber nonwoven fabric, pad treatment, roll screen application, flat screen application, or spray application can be used, for example. The pad treatment is preferably used to coat 100% of the front layer of the nanofiber nonwoven fabric with the water-repellent agent. The roll screen treatment, the flat screen treatment, and the spray treatment are preferably used for partial water-repellent treatment. A face of the nanofiber nonwoven fabric may be subjected to the water-repellent treatment even after the face has been bonded to the outer fabric or the inner fabric. For example, if the water-repellent treatment is performed after the outer fabric has been bonded to the nanofiber nonwoven fabric, the water-repellent agent reaches the outer fabric layer side of the nanofiber nonwoven fabric through spaces between fibers of the outer fabric and spaces in the structure of the outer fabric. If the water-repellent treatment is applied through the inner fabric after the inner fabric has been bonded to the nanofiber nonwoven fabric, the water-repellent agent reaches the inner fabric layer side of the nanofiber nonwoven fabric through spaces between fibers of the inner fabric and spaces in the structure of the inner fabric. If the inner fabric is made of a mesh material, a larger amount of the water-repellent agent reaches the inner fabric layer of the nanofiber nonwoven fabric through the inner fabric, and the water-repellent agent can reach even the outer fabric layer side of the nanofiber nonwoven fabric. The same applies to the water-repellent treatment performed after the nanofiber nonwoven fabric has been bonded to both the outer fabric and the inner fabric. As a technique of the water-repellent treatment performed after the nanofiber nonwoven fabric has been bonded to the outer fabric, the inner fabric, or both of them, pad treatment, roll screen application, flat screen application, or spray application can be used, for example.

The outer fabric preferably has an air permeability (JIS L 1096) of 5 cc/cm$^2$/sec or more. This range of air permeability allows the water-repellent agent to efficiently permeate the outer fabric through spaces between its fibers and spaces in its structure, and reach and be applied to the front face of the nanofiber nonwoven fabric layer.

If the nanofiber nonwoven fabric is made of thermoplastic polyurethane, and the main component of the water-repellent agent is silicone-based or urethane-based, the nanofiber nonwoven fabric has a high affinity with the water-repellent agent. In this case, if the water-repellent treatment is applied through the inner fabric after the inner fabric has been bonded to the nanofiber nonwoven fabric, the water-repellent agent more efficiently reaches the outer fabric layer side of the nanofiber nonwoven fabric.

To join the nanofiber nonwoven fabric to the outer fabric, nanofibers may be directly laminated on the fabric. Alternatively, nanofibers that have been spun and laminated on a release paper may be joined to the fabric with an adhesive. Considering the performance stability, the spinning and lamination on a release paper and joining with an adhesive is preferable. The adhesive used to join the nanofiber nonwoven fabric to the outer fabric may be urethane-based, epoxy-based, melamine-based, or nylon-based. The adhesive may be of a one-solution type or a two-solution type. The adhesive may be another adhesive. As schemes for bonding the nanofiber nonwoven fabric to the outer fabric, the adhesive can be applied to the outer fabric using treatment methods such as a knife coater, a roll coater, a bar coater, and a spray. If the adhesive is applied to the whole front face of the nanofiber nonwoven fabric, the adhesive hardens the texture and impairs the moisture permeability and air permeability. Thus, partial bonding is preferable. As long as the nanofiber nonwoven fabric can be joined to the outer fabric by partially applying the adhesive, any bonding scheme such as a knife coater, a roll coater, a bar coater, and a spray can be used.

Before practical use of the moisture-permeable waterproof laminated fabric, its back side may be subjected to no treatment or a resin treatment or may be bonded to another layer of fabric. When the fabric is used without having been subjected to such treatment, fracture of its nanofibers is a concern. Thus, it is preferable that the back side of the laminated fabric cannot be seen when the fabric is used. For example, the fabric is used as a front fabric of down wear or a padded jacket. For the resin treatment, resins such as a urethane resin, an acrylic resin, or a nylon resin can be used. As a method for applying the resin treatment, the resin may be partially applied in some pattern with a gravure roll, or may be applied to the whole surface with a knife coater.

If one layer of fabric is bonded to the back side of the moisture-permeable waterproof laminated fabric, the inner fabric may be a tricot fabric, a fabric knitted by circular knitting, or a woven fabric. Fibers that can be used for the inner fabric include synthetic fibers such as polyester, nylon, polypropylene, acrylic, and polyurethane, and natural fibers such as cotton, hemp, silk, and wool. The inner fabric may include some of these fibers in the form of mixed fibers, mixed spun yarn, a mixed woven fabric, or a mixed knitted fabric. Among them, the inner fabric is preferably a half-tricot fabric obtained by knitting nylon multifilament yarn by warp knitting.

The outer fabric may be a woven fabric or a knitted fabric. Fibers that can be used for the outer fabric include synthetic fibers such as polyester, nylon, polypropylene, acrylic, and polyurethane, and natural fibers such as cotton, hemp, silk, and wool. The outer fabric may include some of these fibers in the form of mixed fibers, mixed spun yarn, a mixed woven fabric, or a mixed knitted fabric. Among them, the outer fabric is preferably a tricot fabric obtained by knitting polyester (PET) multifilament yarn by warp knitting.

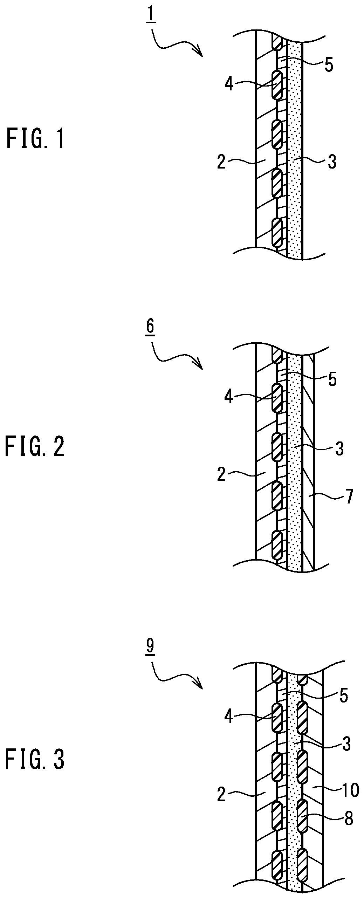

Moisture-permeable waterproof laminated fabrics will be described below with reference to the drawings. In the drawings, the same reference numerals are assigned to the same components. FIG. 1 is a schematic cross-sectional view of a moisture-permeable waterproof laminated fabric of a 2-layer structure according to an embodiment of the present invention. A moisture-permeable waterproof laminated fabric 1 includes an outer fabric layer 2 and a nanofiber nonwoven fabric layer 3. The nanofiber nonwoven fabric layer 3 is laminated on one face of the outer fabric layer 2. The outer fabric layer 2 and the nanofiber nonwoven fabric layer 3 are bonded together with a partially-bonding portion 4. The nanofiber nonwoven fabric layer 3 includes a water-repellent layer 5, which is a face of the nanofiber nonwoven fabric layer 3 on the outer fabric layer 2 side.

FIG. 2 is a schematic cross-sectional view of a moisture-permeable waterproof laminated fabric 6 of a 2.5-layer structure according to an embodiment of the present invention. Unlike FIG. 1, a printed layer 7 is formed on the back face of the nanofiber nonwoven fabric layer 3.

FIG. 3 is a schematic cross-sectional view of a moisture-permeable waterproof laminated fabric 9 of a 3-layer structure according to an embodiment of the present invention. Unlike FIG. 1, an inner fabric layer 10 is formed on the back face of the nanofiber nonwoven fabric layer 3, and the nanofiber nonwoven fabric layer 3 and the inner fabric layer 10 are bonded together with a partially-bonding portion 8.

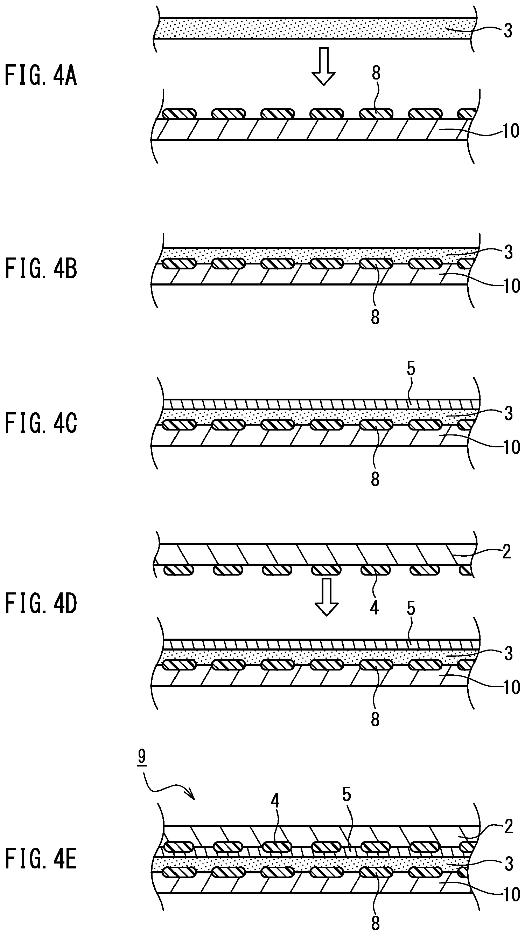

FIGS. 4A to 4E are schematic cross-sectional process diagrams illustrating a method for manufacturing a moisture-permeable waterproof laminated fabric of a 3-layer structure according to an embodiment of the present invention. First, as illustrated in FIG. 4A, an adhesive is partially applied to a face of an inner fabric layer 10 to bond the inner fabric 10 and a nanofiber nonwoven fabric 3 together with a partially-bonding portion 8. As a result, the state of FIG. 4B is obtained. Next, as illustrated in FIG. 4C, a water-repellent agent is partially applied to the nanofiber nonwoven fabric layer 3, and cured by aging to form a water-repellent layer 5. Next, as illustrated in FIG. 4D, an adhesive is partially applied to a face of an outer fabric layer 2 to bond the outer fabric layer 2 and the nanofiber nonwoven fabric layer 3 together with a partially-bonding portion 4. As a result, the state of FIG. 4E is obtained, and a moisture-permeable waterproof laminated fabric 9 is obtained.

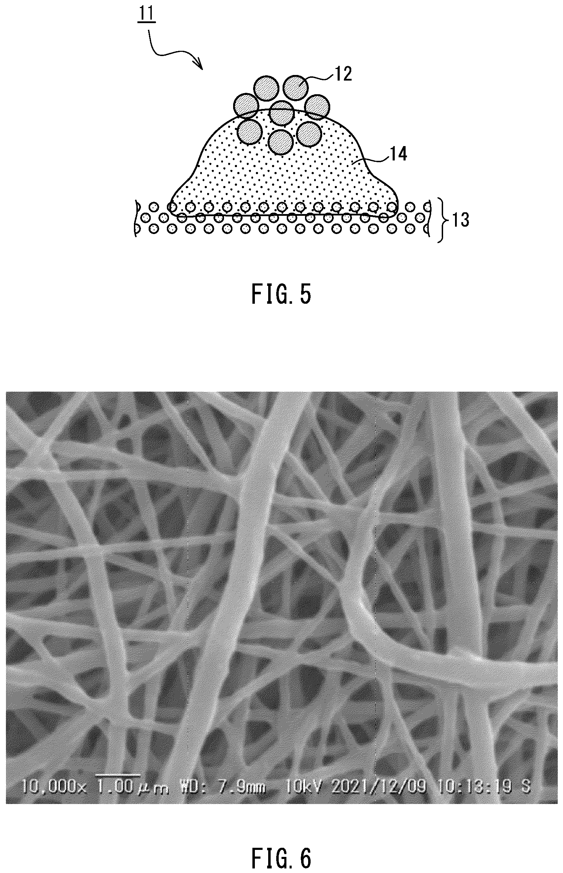

FIG. 5 is a schematic cross-sectional view illustrating a nanofiber nonwoven fabric layer and an outer fabric layer that are bonded together according to an embodiment of the present invention. In a partially-bonding portion 11, an adhesive 13 is present between fibers 12 of the outer fabric layer and fibers 14 of the nanofiber nonwoven fabric layer. The fibers 12 of the outer fabric layer and the fibers 14 of the nanofiber nonwoven fabric layer are impregnated with the adhesive 13 such that the adhesive 13 wraps each fiber. This configuration can improve the bonding strength. It is preferable that nanofibers in the treated water-repellent layer side of the nanofiber nonwoven fabric are impregnated with the adhesive for joining such that the adhesive wraps each nanofiber in its circumferential direction. Because the adhesive coats fibers of the nanofiber nonwoven fabric such that the adhesive wraps the fibers, the bonded area between each nanofiber and the adhesive increases, and thus the bonding strength is good.

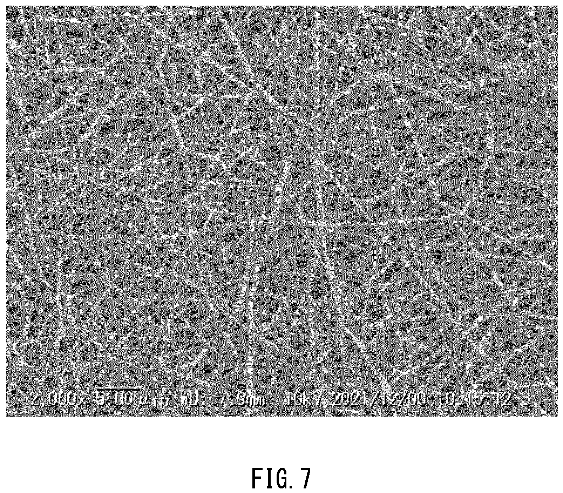

FIG. 6 is a two-dimensional photo (a scanning electron microscope (SEM), the magnification of 10,000 times) of a nanofiber nonwoven fabric according to an embodiment of the present invention. FIG. 7 is a two-dimensional photo (a SEM, the magnification of 2,000 times) of a nanofiber nonwoven fabric according to an embodiment of the present invention.

Examples

Hereinafter, the present invention will be more specifically described by way of Examples. However, the present invention is not limited to the following Examples.

Evaluation methods are as described below.

Mass per unit area

The measurement was according to method A specified in JIS L 1096:2010.

Water pressure resistance

The measurement was according to method B specified in JIS L 1092:2009.

Moisture permeability

The measurement was according to the following three methods.

Method A-1 specified in JIS L 1099:2012
Method B-1 specified in JIS L 1099:2012
An original method

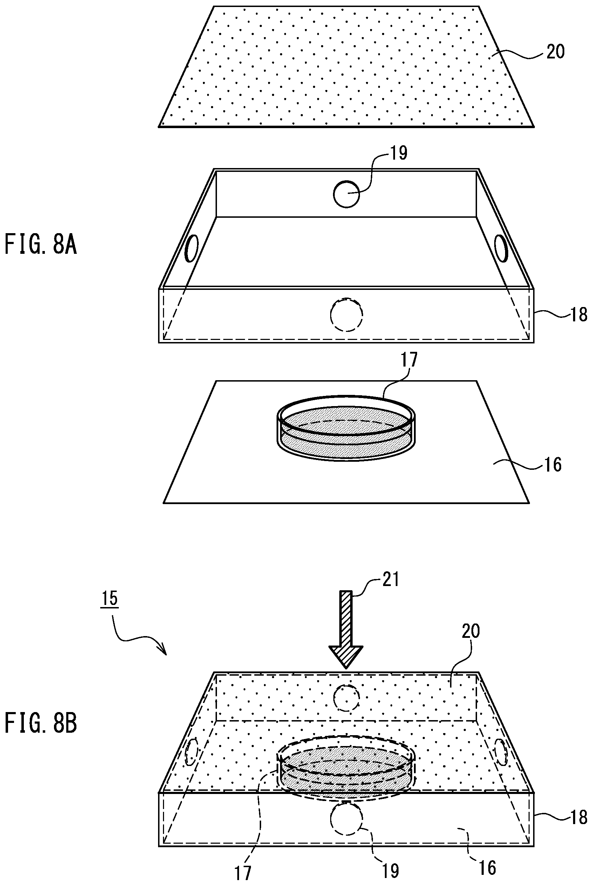

As illustrated in a moisture-permeability measuring device 15 in FIGS. 8A to 8B, a glass petri dish 17 having a diameter of 6.4 cm was placed on a hot plate 16 regulated to 35°C. Approximately 15 g of water was poured into the petri dish 17. The petri dish 17 and the hot plate 16 were covered with a polypropylene box 18 having a length of 15 cm, a width of 15 cm, and a height of 3.5 cm. The box 18 had an opening in its top. The opening, which had a length of 10 cm and a width of 10 cm, was covered with a fabric 20 stuck to the top of the box 18. The fabric 20 had been cut into the size of a length of 15 cm and a width of 15 cm. The fabric 20 was exposed to wind 21 that flowed downward at 0.3 m/sec, as indicated by an arrow. Temperature and humidity sensors 19 (Hygrochrons, KN Laboratories, Inc.) were stuck to the inner walls of the box 18 to measure the temperature and relative humidity in the space defined by the hot plate 16, the box 18, and the fabric 20. The measured temperature and relative humidity were used to calculate absolute humidity using the following formula. The measurement was performed in a room where the temperature and the relative humidity were regulated to 20°C and 65%R.H.

Absolute humidity $(g/m^3)$ = 217 $\times$ 6.1078 $\times$ $10^{(7.5 \times T/(T + 237.3))/(T + 273.15)}$ $\times$ RH/100 where T is temperature (°C) and RH is relative humidity (%)

The present test method had two conditions of a dry state and a wet state. In the dry state, the fabric as a test sample was placed in a room for 24 hours or longer where the temperature was regulated to 20°C and the relative humidity was regulated to 65%R.H., and then the above test was performed in a state where the temperature and the humidity were regulated. In the wet state, the fabric was immersed in deionized water for one hour, and then hung to dry for one minute to remove water drops on the fabric. The dried fabric was subjected to the test.

Air permeability resistance

The measurement was performed with an air permeability resistance tester KS- F8 (manufactured by Kato Tech Co., Ltd.). The measurement was performed by detecting the pressure while air was released to and sucked from the atmosphere, and calculating an air permeability resistance R.

Ventilation rate: 0.4 cc/cm$^2$/sec (constant ventilation rate scheme)
Vent area: 2 $\pi$cm$^2$

The air permeability resistance in the dry state was measured in a state where the fabric was in the dry state, the temperature was 20°C, and the relative humidity was 65%R.H. The air permeability resistance in the wet state was measured in a state where the fabric was wet with moisture whose mass was 30 to 80% of the mass (as 100%) of the fabric, and air was released and sucked in a direction parallel to the ground. The temperature and the humidity were the same as those described above. The test in the wet state included a pretreatment in which the moisture-permeable waterproof laminated fabric was immersed in deionized water for 60 seconds, and then hung to dry for 30 seconds. At the start of the measurement, it was confirmed whether the moisture-permeable waterproof laminated fabric retained liquid water whose mass was 30 to 80% of the mass (as 100%) of the fabric, and then the measurement was performed. It was also confirmed that when the moisture-permeable waterproof laminated fabric was wet, that is, retained liquid water whose mass was 30 to 80% of the mass (as 100%) of the fabric, the moisture-permeable waterproof laminated fabric had certain air permeability resistances. The measurement method is as described below.

(1) A fabric was immersed in a water tank such that the fabric was perpendicular to the ground. Then, the sample was taken out from the water tank, and the fabric was placed in the tester.
(2) The measurement was performed according to a method that conforms to the KES test manual.

Air permeability

The air permeability of the fabric was measured according to JIS L 1096:2010 (the Frazier method).

Example 1

(1) Outer fabric

Polyester multifilament yarn of 22 decitex and 24 filaments was knitted into a fabric with a warp knitting machine (tricot knitting machine) with a gauge of 40. The fabric was subjected to scouring, presetting, dyeing, water-repellent treatment, and heat setting, and the treated fabric was used as an outer fabric. The outer fabric had a mass of 73 g/m$^2$.

(2) Inner fabric

Nylon yarn of 22 decitex and 12 filaments was knitted into a half tricot as a knitted structure with a tricot knitting machine. The half tricot was subjected to scouring, presetting, dyeing, water-repellent treatment, and heat setting to obtain an inner fabric. The inner fabric had a mass of 22 g/m$^2$.

(3) Nanofiber nonwoven fabric

A nanofiber nonwoven fabric was manufactured by electrospinning. The nanofibers were made of thermoplastic polyurethane (polyester-based polyurethane). The solvent contained an organic solvent that can dissolve polyurethane, and a polar solvent suitable for electrospinning (a mixture solvent of dimethylformamide and methyl ethyl ketone). The polyurethane nanofiber nonwoven fabric included monofilaments having an average fiber diameter of 250 nm. The nonwoven fabric had a film thickness of 19 $\mu$m and a mass per unit area of 7.5 g/m$^2$.

(4) Bonding the inner fabric to the nanofiber nonwoven fabric

A polyamide-based hot-melt adhesive was applied to the inner fabric in a dot pattern. The inner fabric and the nanofiber nonwoven fabric placed on the face of the inner fabric to which the adhesive was applied were subjected to press bonding by passing them through heat rollers having a temperature of 110°C, and were wound into a roll. The bonded area between the inner fabric and the nanofiber nonwoven fabric was 40% of the whole area as 100%. The impregnation rate of the adhesive in the thickness direction was 30%.

(5) Subjecting the front layer of the nanofiber nonwoven fabric to a water-repellent treatment

After the inner fabric was bonded to the nanofiber nonwoven fabric, the front face of the nanofiber nonwoven fabric was subjected to a water-repellent treatment. The water-repellent agent was a solution prepared by diluting a non-fluorine-based water-repellent agent containing alkyl urethane as its main component ("ON Water Repellent NF" manufactured by NAGASE-OG COLORS & CHEMICALS CO., LTD.) by a factor of 100. The water-repellent agent in an amount of 4% on the weight of fiber (owf) was applied to the surface of the front layer of the nanofiber nonwoven fabric with a spray. After the application, the water-repellent agent was dried at 110°C for one minute. The thickness of the water-repellent layer formed in the front face of the nanofiber nonwoven fabric was 30% from the front layer of the nanofiber nonwoven fabric. The area ratio of the area of the applied water-repellent agent to the whole area was 80%:100%.

(6) Bonding of the outer fabric

The nanofiber nonwoven fabric whose front layer was subjected to the water-repellent treatment was bonded to the outer fabric. The adhesive was a moisture-curing urethane binder. The adhesive in an amount of 10 g/m$^2$ was applied with a spray. After the application, the nanofiber nonwoven fabric and the outer fabric were passed between heat rollers at 110°C and at a speed of 20 m/min to cure the adhesive and thus obtain a laminated fabric. The bonded area between the outer fabric and the nanofiber nonwoven fabric was 40% of the whole area as 100%. The impregnation rate of the adhesive in the thickness direction was 30%.

The resulting moisture-permeable waterproof laminated fabric in a stationary state had a thickness of 0.44 mm.

Example 2

As an outer fabric, polyester yarn of 22 decitex and 24 filaments was knitted into a tricot mesh knitted fabric with a gauge warp knitting machine. The knitted fabric was subjected to scouring, presetting, dyeing, water-repellent treatment, and heat setting, and the treated fabric was used as an outer fabric. The outer fabric had a mass of 53 g/m$^2$. Other than these, Example 2 was similarly performed as Example 1.

The resulting moisture-permeable waterproof laminated fabric in a stationary state had a thickness of 0.50 mm.

Example 3

The polyurethane nanofibers had an average fiber diameter of 250 nm. The nanofiber nonwoven fabric layer had a film thickness of 12 $\mu$m. The nanofiber nonwoven fabric layer had a mass of 6 g/m$^2$. A moisture-curing polyurethane-based hot-melt adhesive was applied to an inner fabric in the form of a spray in an amount of 10 g/m$^2$. The inner fabric and the nanofiber nonwoven fabric placed on the face of the inner fabric to which the adhesive was applied were subjected to press bonding by passing them through heat rollers, and were wound into a roll. The temperature of the heat press was 110°C. The winding speed was 20 m/min. Other than these, Example 3 was similarly processed as Example 1.

The bonded area between the inner fabric and the nanofiber nonwoven fabric was 45% of the whole area as 100%. The impregnation rate of the adhesive in the thickness direction was 40%.

The thickness of the treated water-repellent layer in the front layer of the nanofiber nonwoven fabric was 40% from the front layer of the nanofiber nonwoven fabric. The area ratio of the area of the applied water-repellent agent to the whole area was 85%:100%.

The bonded area between the outer fabric and the nanofiber nonwoven fabric subjected to the water-repellent treatment was 45% of the whole area as 100%. The impregnation rate of the adhesive in the thickness direction was 40%.

The resulting moisture-permeable waterproof laminated fabric in a stationary state had a thickness of 0.52 mm.

Example 4

In bonding of an inner fabric to a nanofiber nonwoven fabric, a moisture-curing polyurethane-based hot-melt adhesive was applied to the inner fabric in the form of a spray in an amount of 7 g/m$^2$. The inner fabric and the nanofiber nonwoven fabric placed on the face of the inner fabric to which the adhesive was applied were subjected to press bonding by passing them through heat rollers, and were wound into a roll. The temperature of the heat press was 110°C. The winding speed was 20 m/min. Other than these, Example 4 was similarly performed as Example 3.

The resulting moisture-permeable waterproof laminated fabric in a stationary state had a thickness of 0.52 mm.

Example 5

(1) Outer fabric

Nylon multifilament yarn of 44 decitex and 36 filaments was subjected to weaving, scouring, presetting, dyeing, water-repellent treatment, and heat setting. The resulting fabric, which had a warp density of 150 yarns per inch and a weft density of 100 yarns per inch, was used as an outer fabric. The outer fabric had a mass of 43 g/m$^2$.

(2) Inner fabric

The inner fabric recited in Example 1 was used.

(3) Nanofiber nonwoven fabric

The nanofiber nonwoven fabric recited in Example 3 was used.

(4) Bonding the inner fabric to the nanofiber nonwoven fabric

A moisture-curing polyurethane-based hot-melt adhesive was applied to the inner fabric in a dot pattern in an amount of 6 g/m$^2$. The inner fabric and the nanofiber nonwoven fabric placed on the face of the inner fabric to which the adhesive was applied were subjected to press bonding by passing them through heat rollers, and were wound into a roll.

The bonded area between the inner fabric and the nanofiber nonwoven fabric was 55% of the whole area as 100%. The impregnation rate of the adhesive in the thickness direction was 28%.

(5) Subjecting the front layer of the nanofiber nonwoven fabric to a water-repellent treatment

After the inner fabric was bonded to the nanofiber nonwoven fabric, the front face of the nanofiber nonwoven fabric was subjected to a water-repellent treatment. The water-repellent agent was a solution prepared by diluting a non-fluorine-based water-repellent agent containing alkyl urethane as its main component ("ON Water Repellent NF" manufactured by NAGASE-OG COLORS & CHEMICALS CO., LTD.) by a factor of 100. The water-repellent agent in an amount of 4% on the weight of fiber (owf) was applied to the front face of the nanofiber nonwoven fabric with a spray. After the application, the water-repellent agent was dried at 110°C for one minute. The thickness of the water-repellent layer formed in the front face of the nanofiber nonwoven fabric was 30% from the front layer of the nanofiber nonwoven fabric. The area ratio of the area of the applied water-repellent agent to the whole area was 80%:100%.

(6) Bonding of the outer fabric

The nanofiber nonwoven fabric whose front layer was subjected to the water-repellent treatment was bonded to the outer fabric. A moisture-curing polyurethane-based hot-melt adhesive was applied to the outer fabric in a dot pattern in an amount of 9 g/m$^2$. The outer fabric and the nanofiber nonwoven fabric placed on the face of the outer fabric to which the adhesive was applied were subjected to press bonding by passing them through heat rollers, and were wound into a roll to cure the adhesive and thus obtain a laminated fabric. The bonded area between the outer fabric and the nanofiber nonwoven fabric was 60% of the whole area as 100%. The impregnation rate of the adhesive in the thickness direction was 35%.

The resulting moisture-permeable waterproof laminated fabric in a stationary state had a thickness of 0.37 mm.

Example 6

(1) Outer fabric

The outer fabric recited in Example 2 was used.

(2) Inner fabric

The inner fabric recited in Example 1 was used.

(3) Nanofiber nonwoven fabric

The nanofiber nonwoven fabric recited in Example 3 was used.

(4) Bonding the outer fabric to the nanofiber nonwoven fabric

A moisture-curing polyurethane-based hot-melt adhesive was applied to the outer fabric in a dot pattern in an amount of 12 g/m$^2$. The outer fabric and the nanofiber nonwoven fabric placed on the face of the outer fabric to which the adhesive was applied were subjected to press bonding by passing them through heat rollers, and were wound into a roll.

The bonded area between the outer fabric and the nanofiber nonwoven fabric was 60% of the whole area as 100%. The impregnation rate of the adhesive in the thickness direction was 40%.

(5) Bonding of the inner fabric

The inner fabric was bonded to the face of the nanofiber nonwoven fabric opposite its face bonded to the outer fabric. As the adhesive, a moisture-curing urethane binder was applied in a dot pattern in an amount of 10 g/m$^2$ with a gravure roll. The adhesive was cured to obtain a laminated fabric. The bonded area between the inner fabric and the nanofiber nonwoven fabric was 35% of the whole area as 100%. The impregnation rate of the adhesive in the thickness direction was 40%.

(6) Subjecting the laminated fabric to a water-repellent treatment

A non-fluorine-based water-repellent agent containing alkyl urethane as its main component was applied in an amount of 5% owf to the above manufactured laminated fabric using a pad and drying method. After the application, the water-repellent agent was dried at 150°C for 90 seconds. The thickness of the water-repellent layer formed in the outer fabric layer side of the nanofiber nonwoven fabric was 20%. The thickness of the water-repellent layer formed in the inner fabric layer side of the nanofiber nonwoven fabric was 30%. The area ratio of the applied water-repellent agent on the outer fabric layer side was 60%. The area ratio of the applied water-repellent agent on the inner fabric layer side was 80%.

The resulting moisture-permeable waterproof laminated fabric in a stationary state had a thickness of 0.60 mm.

Example 7

(1) Outer fabric

The outer fabric recited in Example 2 was used.

(2) Inner fabric

The inner fabric recited in Example 1 was used.

(3) Nanofiber nonwoven fabric

The nanofiber nonwoven fabric recited in Example 3 was used.

(4) Bonding the outer fabric to the nanofiber nonwoven fabric

The bonding was similarly performed as Example 6.

(5) Bonding of the inner fabric

The bonding was similarly performed as Example 5.

(6) Subjecting the laminated fabric to a water-repellent treatment through the outer fabric

A non-fluorine-based water-repellent agent containing alkyl urethane as its main component was applied in an amount of 5% owf to the above manufactured laminated fabric through the outer fabric with a gravure roll. After the application, the water-repellent agent was dried at 150°C for 90 seconds. The front layer of the nanofiber nonwoven fabric was impregnated with the water-repellent agent applied to the outer fabric. The thickness of the resulting water-repellent layer was 38% of the thickness of the nanofiber nonwoven fabric. The area ratio of the area of the applied water-repellent agent to the whole area was 78%:100%.

The resulting moisture-permeable waterproof laminated fabric in a stationary state had a thickness of 0.61 mm.

Example 8

(1) Outer fabric

The outer fabric recited in Example 2 was used.

(2) Inner fabric

The inner fabric recited in Example 1 was used.

(3) Nanofiber nonwoven fabric

The nanofiber nonwoven fabric recited in Example 3 was used.

(4) Bonding the outer fabric to the nanofiber nonwoven fabric

A moisture-curing polyurethane-based hot-melt adhesive was applied to the outer fabric in a dot pattern in an amount of 12 g/m$^2$. The outer fabric and the nanofiber nonwoven fabric placed on the face of the outer fabric to which the adhesive was applied were subjected to press bonding by passing them through heat rollers, and were wound into a roll.

The bonded area between the outer fabric and the nanofiber nonwoven fabric was 60% of the whole area as 100%. The impregnation rate of the adhesive in the thickness direction was 40%.

(5) Subjecting the inner fabric side of the nanofiber nonwoven fabric to a water-repellent treatment

After the outer fabric was bonded to the nanofiber nonwoven fabric, the inner fabric surface of the nanofiber nonwoven fabric was subjected to a water-repellent treatment. A non-fluorine-based water-repellent agent containing alkyl urethane as its main component was applied in an amount of 5% owf to the inner fabric side of the nanofiber nonwoven fabric with a gravure roll. After the application, the water-repellent agent was dried at 150°C for 90 seconds. The thickness of the water-repellent layer formed in the front face of the nanofiber nonwoven fabric was 30% from the front layer of the nanofiber nonwoven fabric. The area ratio of the area of the applied water-repellent agent to the whole area was 80%:100%.

(6) Bonding of the inner fabric

The inner fabric was bonded to the face of the nanofiber nonwoven fabric opposite its face bonded to the outer fabric. As the adhesive, a moisture-curing urethane binder was applied in a dot pattern in an amount of 10 g/m$^2$ with a gravure roll. The adhesive was cured to obtain a laminated fabric. The bonded area between the inner fabric and the nanofiber nonwoven fabric was 60% of the whole area as 100%. The impregnation rate of the adhesive in the thickness direction was 40%.

(7) Subjecting the laminated fabric to a water-repellent treatment through the outer fabric

A non-fluorine-based water-repellent agent containing alkyl urethane as its main component was applied in an amount of 5% owf to the above manufactured laminated fabric through the outer fabric with a gravure roll. After the application, the water-repellent agent was dried at 150°C for 90 seconds. The front layer of the nanofiber nonwoven fabric was impregnated with the water-repellent agent applied to the outer fabric. The thickness of the resulting water-repellent layer was 30% of the thickness of the nanofiber nonwoven fabric. The area ratio of the area of the applied water-repellent agent to the whole area was 80%:100%.

The resulting moisture-permeable waterproof laminated fabric in a stationary state had a thickness of 0.61 mm.

Comparative Example 1

A commercially available product A was tested. The commercially available product A included an outer fabric, an inner fabric, and a polyurethane nonporous film instead of the nanofiber nonwoven fabric. The outer fabric was a ripstop woven fabric made of nylon yarn having a fineness of 44 decitex and including 36 filaments. The inner fabric was a tricot fabric made of nylon yarn.

Comparative Example 2

A commercially available product B was tested. The commercially available product B included an outer fabric, a polyurethane nonporous film instead of the nanofiber nonwoven fabric, and a polyurethane resin applied in a dot pattern instead of the inner fabric. The outer fabric was a taffeta woven fabric made of nylon yarn having a fineness of 44 decitex and including 36 filaments.

Comparative Example 3

A commercially available product C was tested. The commercially available product C included an outer fabric, a polyurethane nonporous film instead of the nanofiber nonwoven fabric, and a polyurethane resin applied in a dot pattern instead of the inner fabric. The outer fabric was a taffeta woven fabric whose warp and weft were nylon multifilament yarn.

Comparative Example 4

A commercially available product D was tested. The commercially available product D included an outer fabric, and a polytetrafluoroethylene (PTFE) film instead of the nanofiber nonwoven fabric. The outer fabric was a taffeta woven fabric whose warp and weft were nylon yarn.

Comparative Example 5

A commercially available product E was tested. The commercially available product E included an outer fabric, an inner fabric, and a polytetrafluoroethylene (PTFE) film instead of the nanofiber nonwoven fabric. The outer fabric was a ripstop woven fabric whose warp and weft were nylon yarn. The inner fabric was a plain-stitch fabric made of nylon yarn.

Comparative Example 6

A commercially available product F was tested. The commercially available product F included an outer fabric, an inner fabric, and a nanofiber nonwoven fabric as a moisture-permeable waterproof film. The outer fabric was a ripstop woven fabric whose warp and weft were nylon and polyurethane yarn, respectively. The inner fabric was a plain-stitch fabric made of polyester yarn. The front layer of the nanofiber nonwoven fabric was subjected to no water-repellent treatment.

Comparative Example 7

A commercially available product G was tested. The commercially available product G included an outer fabric, an inner fabric, and a polyurethane nonporous film instead of the nanofiber nonwoven fabric. The outer fabric and the inner fabric were each a plain-stitch fabric made of polyester yarn.

Tables 1 and 2 show the above conditions and the obtained results.

[Table 1]

| | The number of layers | Outer fabric Structure | Outer fabric Material | Adhesive amount (g/m²) between outer fabric and moisture-permeable waterproof film | Type of moisture-permeable waterproof film | Inner fabric Structure | Inner fabric Material | Adhesive amount (g/m²) between inner fabric and moisture-permeable waterproof film | Mass (g/m²) of laminated fabric |
|---|---|---|---|---|---|---|---|---|---|
| Ex. 1 | 3 | Warp knitting | Polyester | 7 | Pu-NF nonwoven fabric | Warp knitting | Nylon | 7 | 125 |
| Ex. 2 | 3 | Warp knitting | Polyester | 7 | Pu-NF nonwoven fabric | Warp knitting | Nylon | 7 | 105 |
| Ex. 3 | 3 | Warp knitting | Polyester | 10 | Pu-NF nonwoven fabric | Warp knitting | Nylon | 10 | 132 |
| Ex. 4 | 3 | Warp knitting | Polyester | 10 | Pu-NF nonwoven fabric | Warp knitting | Nylon | 7 | 130 |
| Ex. 5 | 3 | Woven fabric | Nylon | 9 | Pu-NF nonwoven fabric | Warp knitting | Nylon | 6 | 115 |
| Ex. 6 | 3 | Warp knitting | Polyester | 12 | Pu-NF nonwoven fabric | Warp knitting | Nylon | 10 | 120 |
| Ex. 7 | 3 | Warp knitting | Polyester | 12 | Pu-NF nonwoven fabric | Warp knitting | Nylon | 10 | 122 |
| Ex. 8 | 3 | Warp knitting | Polyester | 12 | Pu-NF nonwoven fabric | Warp knitting | Nylon | 10 | 125 |
| Comp. Ex. 1 | 3 | Woven fabric | Nylon | 10 | Pu nonporous film | Warp knitting | Nylon | 10 | 112 |
| Comp. Ex. 2 | 2.5 | Woven fabric | Nylon | 9 | Pu nonporous film | No | No | No | 75 |
| Comp. Ex. 3 | 2.5 | Woven fabric | Nylon | 12 | Pu nonporous film | No | No | No | 80 |
| Comp. Ex. 4 | 2 | Woven fabric | Polyester | 10 | ePTFE | No | No | No | 98 |
| Comp. Ex. 5 | 3 | Woven fabric | Nylon | 10 | ePTFE | Warp knitting | Nylon | 10 | 133 |

18

(continued)

|  | The number of layers | Outer fabric | | Adhesive amount (g/m$^2$) between outer fabric and moisture-permeable waterproof film | Type of moisture-permeable waterproof film | Inner fabric | | Adhesive amount (g/m$^2$) between inner fabric and moisture-permeable waterproof film | Mass (g/m$^2$) of laminated fabric |
|  |  | Structure | Material |  |  | Structure | Material |  |  |
| Comp. Ex. 6 | 3 | Woven fabric | Nylon and polyurethane | 8 | Pu-NF nonwoven fabric | Circular knitting | Polyester | 8 | 89 |
| Comp. Ex. 7 | 3 | Circular knitting | Polyester | 10 | Pu nonporous film | Circular knitting | Polyester | 8 | 51 |
| *Example: Ex., Comparative Example: Comp. Ex. | | | | | | | | | |

[Table 2]

| | Water pressure resistance (kPa); method B of JIS L 1092 | Water pressure resistance (kPa); method B of JIS L 1092; after washed 20 times | Moisture permeability (g/m$^2$·24h) | | Absolute humidity (g/m$^3$) in space | | Air permeability resistance (kPa·s/m) in dry state; KES-F8 | Air permeability resistance (kPa·s/m) in wet state KES-F8 | Air permeability (cm$^3$/cm$^2$·s); JIS L 1096 |
|---|---|---|---|---|---|---|---|---|---|
| | | | Method A-1 of JIS L 1099 | Method B-1 of JIS L 1099 | Original method; in dry state | Original method; in wet state | | | |
| Ex. 1 | 15,418 | 11,278 | 9,546 | 46,512 | 16.16 | 16.33 | 46 | 74.5 | 0.20 |
| Ex. 2 | 12,379 | 10,890 | 9,696 | 42,000 | 16.13 | 16.29 | 38 | 70.0 | 0.27 |
| Ex. 3 | 18,732 | 14,397 | 10,200 | 38,376 | 16.00 | 16.10 | 30 | 69.2 | 0.21 |
| Ex. 4 | 18,691 | 15,203 | 10,488 | 40,032 | 16.15 | 16.24 | 35 | 68.3 | 0.24 |
| Ex. 5 | 8,900 | 8,000 | 11,280 | 30,200 | 15.84 | 15.98 | 72 | 110 | 0.21 |
| Ex. 6 | 13,000 | 9,700 | 9,290 | 16,600 | 15.96 | 16.00 | 132 | 210 | 0.28 |
| Ex. 7 | 16,900 | 11,400 | 10,400 | 17,200 | 16.29 | 16.32 | 138 | 233 | 0.32 |
| Ex. 8 | 20,103 | 15,900 | 10,030 | 18,000 | 16.35 | 16.47 | 140 | 265 | 0.35 |
| Comp. Ex. 1 | 44,912 | 43,777 | 3,672 | 16,488 | 17.95 | 19.20 | 53.2 | more than 277.5 | less than 0.05 |
| Comp. Ex. 2 | 31,183 | 33,926 | 4,344 | 30,600 | 18.06 | 19.41 | more than 277.5 | more than 277.5 | less than 0.05 |
| Comp. Ex. 3 | 31,183 | 31,030 | 5,952 | 55,224 | 17.82 | 19.80 | more than 277.5 | more than 277.5 | less than 0.05 |
| Comp. Ex. 4 | 42,420 | 40,180 | 6,624 | 54,120 | 17.40 | 18.51 | more than 277.5 | more than 277.5 | less than 0.05 |
| Comp. Ex. 5 | 50,986 | 50,170 | 10,008 | 22,200 | 17.11 | 18.00 | 203.7 | more than 277.5 | 0.05 |
| Comp. Ex. 6 | 6,016 | 2,905 | 10,104 | 53,904 | 17.21 | 18.61 | 57.4 | more than 277.5 | 0.22 |
| Comp. Ex. 7 | 6,016 | 10,880 | 5,976 | 69,432 | 17.50 | 19.37 | more than 277.5 | more than 277.5 | less than 0.05 |

(*Example: Ex., Comparative Example: Comp. Ex.)

Note 1: "More than 277.5 kPa ·s/m" of the air permeability resistance in a dry state and the air permeability resistance in a wet state is a measurement limit. That is, a value more than 277.5 kPa s/m cannot be measured.

Note 2: "Less than 0.05 cm$^3$/cm$^2$·s" of the air permeability is a measurement limit. That is, a value less than 0.05 cm$^3$/cm$^2$·s cannot be measured.

As shown in Tables 1 to 2, it was confirmed that the moisture-permeable waterproof laminated fabric according to an aspect of the present invention can continue to display the air permeability and the moisture permeability of its moisture-permeable film not only in a dry state but also irrespective of exposure to rain and perspiration during wearing.

The moisture-permeable waterproof laminated fabrics of Examples 1 and 2 were each sewn into a garment. The garments were used for a wear test. As Comparative Examples 1 and 2, commercially available garments were used for the wear test.

The conditions of the wear test are as described below.

While the wearer ran on a treadmill at a speed of 10 km/hr for 30 minutes in a test room where the temperature was 20°C and the relative humidity was 65%R.H., the temperature in the garment and the relative humidity in the garment were measured with temperature and humidity sensors (Hygrochrons, KN Laboratories, Inc.). The obtained temperature and relative humidity were used to calculate absolute humidity using the following formula.

$$\text{Absolute humidity (g/m}^3) = 217 \times 6.1078 \times 10^{(7.5 \times T/(T + 237.3))/(T + 273.15)} \times RH/100$$

The temperature and humidity sensors were attached to four places of the chest, the abdomen, the back, and the lower back. Their data for the last ten minutes of the running was used for evaluation. The average value of the absolute humidity values at the places was used for comparison. The results are shown in Table 3.

As the wear condition, an undershirt made of a two-way tricot knitted fabric containing 86% polyester and 14% polyurethane was worn on the upper part of the body, and the measurement sample was worn on the undershirt. Further, half pants made of a fabric containing 100% polyester were worn on the lower part of the body.

[Table 3]

|  | Example 1 | Example 2 | Comparative Example 1 | Comparative Example 2 |
|---|---|---|---|---|
| Absolute humidity (g/m$^3$) in garment | 21.15 | 21.18 | 23.59 | 24.14 |

As shown in Table 3, the absolute humidity in the garment of each of Examples 1 and 2 was lower than that in the garments of Comparative Examples 1 and 2. The garments of Examples 1 and 2 each eliminated a sticky feeling in the space in the garment irrespective of exposure to rain and perspiration during wearing compared with the garments of Comparative Examples 1 and 2, and could maintain a comfortable environment in the garment.

Industrial Applicability

The moisture-permeable waterproof laminated fabric according to an aspect of the present invention can be suitably used as clothing such as outdoor clothing such as fishing clothing and mountaineering clothing, skiwear, snowboarding clothing, windbreakers, athletic clothing, golf clothing, tennis clothing, rainwear, casual wear, workwear, gloves, shoes, and outer fabrics of down wear and padded jackets. Further, the moisture-permeable waterproof laminated fabric can be also suitably used in clothing material fields such as glove inserts and boot inserts, and non-clothing fields such as construction materials such as wallpaper and waterproof roofing sheets.

Description of Reference Numerals

1, 6, 9      Moisture-permeable waterproof laminated fabric
2            Outer fabric layer
3            Nanofiber nonwoven fabric layer
4, 8, 11     Partially-bonding portion
5            Water-repellent layer
7            Printed layer
10           Inner fabric layer
12           Fiber of outer fabric layer
13           Adhesive
14           Fiber of nanofiber nonwoven fabric layer
15           Moisture-permeability measuring device
16           Hot plate
17           Glass petri dish

| 18 | Box |
| 19 | Temperature and humidity sensor |
| 20 | Fabric |
| 21 | Wind |

**Claims**

1. A moisture-permeable waterproof laminated fabric comprising:

 an outer fabric layer; and
 a nanofiber nonwoven fabric layer laminated on one face of the outer fabric layer,
 wherein at least one face of the nanofiber nonwoven fabric layer is a water-repellent layer, and
 the outer fabric layer and the nanofiber nonwoven fabric layer are bonded together with a partially-bonding portion.

2. The moisture-permeable waterproof laminated fabric according to claim 1, wherein the water-repellent layer is on an outer fabric layer side of the nanofiber nonwoven fabric layer.

3. The moisture-permeable waterproof laminated fabric according to claim 1 or 2, further comprising an inner fabric layer laminated on a back face of the nanofiber nonwoven fabric layer,
 wherein the nanofiber nonwoven fabric layer and the inner fabric layer are bonded together with a partially-bonding portion.

4. The moisture-permeable waterproof laminated fabric according to any one of claims 1 to 3, wherein an area ratio of an area of the water-repellent layer to a fiber surface area of a face of a nanofiber nonwoven fabric subjected to a water-repellent treatment is 10-100%:100%.

5. The moisture-permeable waterproof laminated fabric according to any one of claims 1 to 4, wherein an area ratio of the partially-bonding portion between the outer fabric layer and the nanofiber nonwoven fabric layer or an area ratio of the partially-bonding portion between the inner fabric layer and the nanofiber nonwoven fabric layer is in a range of 10-80%.

6. The moisture-permeable waterproof laminated fabric according to any one of claims 1 to 5, wherein the water-repellent layer is at least one face of the nanofiber nonwoven fabric layer that has been subjected to a water-repellent treatment with a non-fluorine-based water-repellent agent.

7. The moisture-permeable waterproof laminated fabric according to any one of claims 1 to 6, wherein the nanofiber nonwoven fabric layer includes nanofibers made of a thermoplastic polyurethane and having an average fiber diameter of 1 nm to 1,000 nm.

8. The moisture-permeable waterproof laminated fabric according to any one of claims 1 to 7, having an air permeability resistance of 0 to 277.5 kPa ·s/m when it is wet with water.

9. The moisture-permeable waterproof laminated fabric according to any one of claims 1 to 8, having a moisture permeability of 5,000 to 20,000 g/m$^2$·24h according to method A-1 specified in JIS L 1099 when it is in a dry state, and having a moisture permeability of 10,000 to 100,000 g/m$^2$·24h according to method B-1 specified in JIS L 1099 when it is in a dry state.

10. The moisture-permeable waterproof laminated fabric according to any one of claims 1 to 9, having a water pressure resistance of 7,000 to 30,000 mm according to JIS L 1099 if it has not been washed, and having a water pressure resistance of 5,000 to 25,000 mm according to JIS L 1099 after it has been washed 20 times.

11. The moisture-permeable waterproof laminated fabric according to any one of claims 1 to 10, having an air permeability of 0.01 to 2 cc/m$^2$·sec according to JIS L 1096 (Frazier method).

12. The moisture-permeable waterproof laminated fabric according to any one of claims 1 to 11, wherein the outer fabric has been subjected to a water-repellent treatment.

13. A method for manufacturing the moisture-permeable waterproof laminated fabric according to any one of claims 1 to 12, the method comprising:

applying a water-repellent agent to at least one face of a nanofiber nonwoven fabric layer, and curing the water-repellent agent to form a water-repellent layer; and
partially bonding the nanofiber nonwoven fabric layer and an outer fabric layer together with an adhesive.

14. A garment comprising the moisture-permeable waterproof layer fabric according to any one of claims 1 to 12.

FIG. 1

FIG. 2

FIG. 3

FIG. 4A

FIG. 4B

FIG. 4C

FIG. 4D

FIG. 4E

FIG. 5

FIG. 6

FIG. 7

FIG. 8A

20

19

18

17

16

FIG. 8B

15

21

20

18

17    19    16

| INTERNATIONAL SEARCH REPORT | International application No. |
|---|---|
| | **PCT/JP2023/022967** |

**A. CLASSIFICATION OF SUBJECT MATTER**

***B32B 5/26***(2006.01)i; ***A41D 31/00***(2019.01)i; ***A41D 31/02***(2019.01)i; ***A41D 31/102***(2019.01)i; ***D04H 1/728***(2012.01)i; ***D06M 15/564***(2006.01)i; ***D06M 17/00***(2006.01)i
FI: B32B5/26; A41D31/00 502E; A41D31/02 D; A41D31/102; D04H1/728; D06M15/564; D06M17/00 H; D06M17/00 M

According to International Patent Classification (IPC) or to both national classification and IPC

**B. FIELDS SEARCHED**

Minimum documentation searched (classification system followed by classification symbols)

B32B5/26; A41D31/00; A41D31/02; A41D31/102; D04H1/728; D06M15/564; D06M17/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2009/157400 A1 (TORAY INDUSTRIES, INC.) 30 December 2009 (2009-12-30) paragraphs [0001], [0008], [0011]-[0012] | 1-12, 14 |
| A | | 13 |
| X | WO 2008/108393 A1 (TOYO BOSEKI KK) 12 September 2008 (2008-09-12) paragraphs [0001], [0048], [0051]-[0055], [0057], [0059]-[0062], [0064], [0068] | 1-12, 14 |
| A | | 13 |
| A | JP 2007-136970 A (KOMATSU SEIREN CO., LTD.) 07 June 2007 (2007-06-07) | 1-14 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **13 September 2023** | **26 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/022967**

| Patent document cited in search report | | | Publication date (day/month/year) | Patent family member(s) | Publication date (day/month/year) |
|---|---|---|---|---|---|
| WO | 2009/157400 | A1 | 30 December 2009 | (Family: none) | |
| WO | 2008/108393 | A1 | 12 September 2008 | (Family: none) | |
| JP | 2007-136970 | A | 07 June 2007 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007136970 A
- JP 2008213391 A
- JP 2010255132 A
- JP 2010030289 A